(19) Europäisches Patentamt
European Patent Office
Office européen des brevets

(11) **EP 4 715 785 A1**

(12) **DEMANDE DE BREVET EUROPEEN**

(43) Date de publication:
**25.03.2026 Bulletin 2026/13**

(21) Numéro de dépôt: **25203128.1**

(22) Date de dépôt: **18.09.2025**

(51) Classification Internationale des Brevets (IPC):
*G08G 5/00* (2025.01)      *G06Q 10/06* (2023.01)
*G06Q 50/06* (2024.01)      *G08G 5/22* (2025.01)
*G08G 5/32* (2025.01)      *G08G 5/56* (2025.01)
*G08G 5/76* (2025.01)

(52) Classification Coopérative des Brevets (CPC):
G08G 5/00; G06Q 10/06; G06Q 50/06;
G06Q 50/40; G08G 5/22; G08G 5/32; G08G 5/56;
G08G 5/76

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **20.09.2024 FR 2410036**

(71) Demandeur: **THALES**
**92190 Meudon (FR)**

(72) Inventeurs:
• **PABIA, Guillaume**
**33700 MERIGNAC (FR)**
• **GOUBINAT, Damien**
**31036 TOULOUSE (FR)**
• **DESEURE, Chris**
**31036 TOULOUSE (FR)**

(74) Mandataire: **Lavoix**
**2, place d'Estienne d'Orves**
**75441 Paris Cedex 09 (FR)**

(54) **PROCÉDÉ ET DISPOSITIF D ALLOCATION DE CARBURANT D AVIATION DURABLE À UNE PLURALITÉ DE VOLS**

(57)      La présente invention concerne un procédé (50) d'allocation de carburant d'aviation durable à une pluralité de vols, comprenant les étapes suivantes :
- collecte (52) de données de vol acquérant, pour chaque vol, au moins une paire de données formée par une information représentative de l'aéroport de départ et une information représentative de l'aéroport d'arrivée ;
- à partir desdites données collectées et d'une métrique climatique prédéterminée, obtention (54) d'un score estimé représentatif de l'impact climatique estimé de chaque vol couvrant à la fois les émissions $CO_2$ et les effets non-$CO_2$ ;
- à partir de l'ensemble des scores estimés, détermination (62) de l'allocation de carburant d'aviation durable, associée à la réduction maximale de l'impact climatique estimé de la totalité des vols de ladite pluralité, et allouant à chaque vol une quantité élémentaire de carburant d'aviation durable.

FIG.2

**Description**

La présente invention concerne un procédé d'allocation de carburant d'aviation durable à une pluralité de vols.

L'invention a également pour objet un programme d'ordinateur comportant des instructions logicielles qui, lorsqu'elles sont exécutées par un ordinateur, mettent en œuvre un tel procédé.

La présente invention concerne également un dispositif électronique d'allocation de carburant d'aviation durable à une pluralité de vols.

L'invention se situe dans le domaine de l'aéronautique, et plus précisément de l'optimisation des opérations aériennes à des fins de réduction de l'empreinte environnementale associée, le réchauffement climatique étant une problématique actuelle.

Jusqu'ici, le secteur de l'aéronautique a attaché beaucoup d'importance aux émissions de dioxyde de carbone $CO_2$, mais de récentes études ont montré que le $CO_2$ n'est pas l'unique conséquence des opérations aériennes puisque les effets non-$CO_2$ représentent plus de la moitié du forçage radiatif du secteur, un chiffre de 66% étant notamment indiqué au sein de l'article de Lee et al. intitulé « The contribution of global aviation to anthropogenic climate forcing for 2000 to 2018 » avec des incertitudes de l'ordre de +/- 50 mW/m$^2$.

En effet, les émissions dues à la combustion du fuel sont classables en deux catégories, d'une part les produits primaires de combustion de carburéacteur (de l'anglais *Primary jet fuel combustion products)* comme le dioxyde de carbone $CO_2$, l'eau $H_2O$, les oxydes de soufre SOx ($SO_2$, $SO_3$) qui sont le résultat direct de la combustion et ont donc un index d'émission (de l'anglais *emission index)* constant. Cela signifie que la quantité de gaz émise est proportionnelle à la quantité de fuel consommé (ce facteur de proportionnalité étant constant).

La deuxième catégorie correspond d'autre part aux produits secondaires de combustion de carburéacteur (de l'anglais *Secondary jet fuel combustion products)* comme les oxydes d'azote NOx (Oxyde d'azote NO, dioxyde d'azote $NO_2$, protoxyde d'azote, etc.), l'oxyde de carbone CO, HC (de l'anglais *Unburnt hydrocarbons),* PM (de l'anglais *Particular Matter*) ou encore VOC (de l'anglais *Volatile Organic Compounds)* qui dépendent de la nature du processus de combustion et de la charge demandée au moteur. Ils ont donc un index d'émission (de l'anglais *emission index)* qui varie au cours du vol en fonction du type de moteur, des conditions d'opérations des moteurs et des conditions atmosphériques.

Les émissions non-$CO_2$ sont associées à des effets non-$CO_2$ de plusieurs natures, tels que les interactions aérosol-nuage, les interactions aérosol-radiation, la vapeur d'eau stratosphérique, les oxydes d'azote précités, les émissions associées aux trainées de condensation (de l'anglais *contrails)* et également aux oxydes d'azote étant les émissions non-$CO_2$ ayant le forçage radiatif le plus important.

Le forçage radiatif du transport aérien a été estimé à près de 6 à 7% du forçage radiatif global anthropogénique en intégrant les effets $CO_2$ et non-$CO_2$ (2 à 3% en intégrant uniquement les effets $CO_2$).

L'industrie aéronautique a déjà fait de nombreux progrès scientifiques pour améliorer l'efficacité environnementale d'un vol tant en matière de réduction de poids, d'aérodynamisme ou de propulsion. Malgré cela, les émissions du secteur aérien sont de plus en plus importantes à cause de la croissance du trafic qui est estimée à plus de 3,6% par an.

Afin que le secteur aéronautique atteigne une neutralité totale (de l'anglais *true zero aviation),* la réduction des émissions de $CO_2$ doit être complétée par celles des effets non-$CO_2$

Le carburant d'aviation durable SAF (de l'anglais *sustainable aviation fuel*) est aujourd'hui une des réponses proposées par l'industrie aéronautique pour agir sur la décarbonation du secteur.

Les carburants d'aviation durable SAFs sont utilisés en substitution du kérosène classique utilisé dans l'aviation, tel que Jet A-1. La production de carburant d'aviation durable SAF s'appuie sur la capture de carbone, notamment à travers la biomasse ou les huiles de cuisson par exemples.

La combustion de carburant d'aviation durable SAF a donc un effet de réduction des émissions de $CO_2$ lié au $CO_2$ qui a déjà été séquestré. Les carburants d'aviation durable SAFs permettent ainsi de réduire significativement les émissions de $CO_2$ tout en ayant également un impact fort sur les effets non-$CO_2$ issus de l'aviation comme les oxydes d'azote NOx, et particulièrement sur les trainées de condensation.

En effet, les trainées générées par du carburant d'aviation durable SAF (de l'anglais *sustainable aviation fuel)* ou des mélanges de carburant d'aviation durable SAF et de kérosène conventionnel ont des propriétés physiques différentes car constituées de particules plus fines (i.e. de taille plus petite) mais plus nombreuses, et en conséquence ont une opacité réduite et demeurent également moins longtemps dans l'atmosphère (i.e. durée de vie réduite), si bien qu'elles ont un impact réduit en terme de $CO_2$ équivalent.

Ainsi bien qu'il soit souhaitable qu'un aéronef évite de générer une trainée de condensation, la génération d'une trainée de condensation en utilisant du carburant d'aviation durable SAF demeure moins nuisible pour le climat que si elle avait été générée par du kérosène classique.

Toutefois, le carburant d'aviation durable SAF (de l'anglais *sustainable aviation fuel*) est aujourd'hui une ressource rare, disponible uniquement dans quelques aéroports et dans des quantités souvent extrêmement limitées comparées à la demande croissante de l'industrie. La quantité de carburant d'aviation durable SAF étant aujourd'hui très limitée, il est impossible pour chaque aéronef de disposer de carburant d'aviation durable SAF en teneur maximum prévu par les motoristes à savoir jusqu'à 50% sans modifications du moteur ou du système de combustion.

Lorsque disponible au sein d'un aéroport, le carburant d'aviation durable SAF est actuellement alloué de manière homogène sur la flotte disponible. Par exemple, il est décidé qu'une quantité de carburant d'aviation durable SAF est répartie de manière uniforme entre tous les vols d'une période de temps définie, par exemple tous les vols d'un jour partant entre 8h et 11h du matin voleront avec une quantité de SAF égale à 2% de leur total de carburant.

A titre d'alternative, le carburant d'aviation durable SAF est alloué dans une proportion inconnue au sein des cuves, son bénéfice en termes de réduction de $CO_2$ étant accordé, en fonction de la quantité achetée, à l'entité acheteuse dudit carburant d'aviation durable SAF, telle que l'opérateur d'aéronef, un aéroport ou tout autre entité gérant plusieurs aéronefs ou sites.

Autrement dit, aucune allocation actuelle de SAF ne semble être mise en œuvre de manière intelligente.

Au vu d'une telle rareté et de l'efficacité du carburant d'aviation durable SAF pour réduire les émissions de $CO_2$ comme les effets non-$CO_2$, le but de l'invention est alors de proposer une solution permettant d'allouer de manière optimale un tel carburant d'aviation durable.

A cet effet, l'invention a pour objet un procédé d'allocation de carburant d'aviation durable à une pluralité de vols prévus sur un intervalle de temps prédéterminé, le procédé étant mis en œuvre par un dispositif électronique, et comprenant au moins les étapes suivantes mises en œuvre préalablement au départ de ladite pluralité de vol :

- collecte de données de vol acquérant, pour chaque vol, au moins une paire de données formée par une information représentative de l'aéroport de départ et une information représentative de l'aéroport d'arrivée dudit vol ;
- à partir desdites données collectées et d'une métrique climatique prédéterminée, obtention d'un score estimé représentatif de l'impact climatique estimé de chaque vol de ladite pluralité de vols, ledit impact climatique estimé couvrant à la fois les émissions $CO_2$ dudit vol et les effets non-$CO_2$ associés audit vol ;
- à partir de l'ensemble des scores estimés de chaque vol de ladite pluralité de vols, détermination de l'allocation de carburant d'aviation durable, associée à la réduction maximale de l'impact climatique estimé de la totalité des vols de ladite pluralité, ladite allocation allouant à chaque vol une quantité élémentaire de carburant d'aviation durable à utiliser pendant ledit vol.

Ainsi la présente invention propose une solution pour déterminer la meilleure allocation de carburant d'aviation durable SAF possible à une pluralité de vols considérés en fonction de l'impact climatique global de cette allocation, et ce en s'assurant notamment que la faible quantité de carburant d'aviation durable SAF actuellement disponible soit allouée aux vols dont la réduction résultante d'impact, en terme d'émissions $CO_2$ et avantageusement d'effet non-$CO_2$, soit la plus avantageuse.

L'allocation déterminée selon la présente invention est ainsi intelligente, car propre à prioriser l'utilisation de carburant d'aviation durable SAF pour les vols dont l'impact climatique est le plus propre à être réduit par une telle utilisation, et dynamique (i.e. propre à varier) car propre à s'adapter à chaque pluralité de vols considérée.

Suivant d'autres aspects avantageux de l'invention, le procédé comprend une ou plusieurs des caractéristiques suivantes, prises isolément ou suivant toutes les combinaisons techniquement possibles :

- la collecte de données de vol acquiert, pour chaque vol, en complément de ladite paire de données, au moins un élément appartenant au groupe comprenant au moins :

  - le type d'aéronef opérant le vol considéré ;
  - la motorisation de l'aéronef opérant le vol considéré ;
  - l'heure et le jour de départ prévus dudit vol considéré ;
  - la trajectoire et/ou le plan de vol prévu pour ledit vol ;
  - au moins une donnée météo prévue sur la trajectoire de type appartenant au groupe comprenant au moins :

    + une donnée d'humidité ;
    + une donnée de température ;
    + une donnée de vent ;

- l'obtention d'un score estimé représentatif de l'impact climatique de chaque vol de ladite pluralité de vol comprend successivement au moins :

  - la détermination d'au moins une valeur appartenant au groupe comprenant au moins :

    - la quantité de dioxyde de carbone issue des émissions CO2 dudit vol ;

- la quantité de dioxyde de carbone équivalent associé à au moins une trainée de condensation persistante dudit vol ;
- la distance sur laquelle au moins une trainée de condensation persistante dudit vol est propre à se former ;
- une fonction représentative de l'impact climatique au fil du temps le long de la trajectoire dudit vol d'au moins une trainée de condensation persistante propre à se former au cours dudit vol ;

- la détermination d'au moins un élément de score estimé appartenant au groupe comprenant :

- le ratio de la quantité de dioxyde de carbone équivalent associé à au moins une trainée de condensation persistante dudit vol sur la quantité de dioxyde de carbone issue des émissions CO2 dudit vol ;
- le ratio de la distance sur laquelle au moins une trainée de condensation persistante dudit vol est propre à se former sur la distance totale propre à être parcourue durant ledit vol ;
- un élément de score estimé obtenu à partir de la fonction représentative de l'impact climatique au fil du temps le long de la trajectoire dudit vol d'au moins une trainée de condensation persistante propre à se former au cours dudit vol en utilisant l'amplitude et les instants de pics d'impacts représentés via ladite fonction ;

- en cas de détermination d'au moins deux éléments de score estimés, la combinaison selon une règle prédéterminée desdits au moins deux éléments de score estimés pour obtenir ledit score estimé ;

- la détermination de l'allocation de carburant d'aviation durable utilise une optimisation par programmation linéaire ayant un objectif de maximisation de la réduction de l'impact climatique de la totalité des vols de ladite pluralité, et de respect d'au moins une contrainte prédéterminée de disponibilité et d'utilisation de carburant d'aviation durable ;
- ladite au moins une contrainte appartient au groupe comprenant au moins l'une des trois contraintes suivantes :

- la somme des quantités élémentaires de carburant d'aviation durable allouées respectivement à chaque vol de ladite pluralité est inférieure ou égale à la quantité totale de carburant d'aviation durable disponible pour ladite pluralité ;
- pour chaque vol auquel une quantité élémentaire de carburant d'aviation durable est allouée, le pourcentage de ladite quantité élémentaire par rapport à la quantité totale de carburant nécessaire audit vol est inférieur ou égale à une valeur de pourcentage prédéterminée ;
- la somme des quantités élémentaires de carburant d'aviation durable allouées respectivement à chaque vol d'un ensemble de vols de ladite pluralité associé au même aéroport de départ est inférieure ou égale à la quantité totale de carburant d'aviation durable disponible au sein dudit aéroport de départ pour ledit ensemble de vols ;

- le procédé comprend en outre une étape de vérification, après mise en œuvre effective de ladite pluralité de vols, de l'efficacité de ladite allocation ;
- ladite étape de vérification comprend les sous-étapes suivantes mises en œuvre après arrivée de ladite pluralité de vols :

- collecte de données effectives de vol acquérant, pour chaque vol, au moins des données d'au moins un type appartenant au groupe comprenant au moins :

  + des données radar de trajectoire effectuée ;
  +des données de vol brutes fournies par un enregistreur à accès rapide ;
  +des données météorologiques représentatives des conditions météorologiques rencontrées lors dudit vol ;

- à partir desdites données effectives collectées, de ladite allocation et de ladite métrique climatique prédéterminée, obtention d'un score effectif représentatif de l'impact climatique effectif de chaque vol de ladite pluralité de vol, ledit impact climatique effectif couvrant à la fois les émissions CO2 dudit vol et les effets non-CO2 associés audit vol effectué en utilisant le carburant d'aviation durable alloué selon ladite allocation ;
- à partir de l'ensemble des scores effectifs de chaque vol de ladite pluralité de vol, détermination de la réduction effective d'impact climatique obtenue via ladite allocation ;
- comparaison de ladite réduction effective à ladite réduction maximale estimée lors de ladite détermination de l'allocation, et en présence d'un écart, restitution dudit écart ;

- ladite métrique climatique prédéterminée est propre à être sélectionnée au préalable au sein d'une liste comprenant au moins les métriques suivantes :

- GWP20 ;
- GWP50 ;
- GWP100 ;
- ATR20 ;
- ATR50 ;
- ATR100 ;
- GTP20 ou AGTP20 ;
- GTP50 ou AGTP50 ;
- GTP100 ou AGTP100 ;
- EF ou RF.

L'invention concerne également un programme d'ordinateur comportant des instructions logicielles qui, lorsqu'elles sont exécutées par un ordinateur, mettent en œuvre un procédé d'allocation de carburant d'aviation durable à une pluralité de vols tel que défini ci-dessus.

L'invention concerne également un dispositif électronique d'allocation de carburant d'aviation durable à une pluralité de vols prévus sur un intervalle de temps prédéterminé, le dispositif électronique comprenant au moins :

- un module de collecte configuré pour collecter des données de vol et acquérir, pour chaque vol, au moins une paire de données formée par une information représentative de l'aéroport de départ et une information représentative de l'aéroport d'arrivée dudit vol ;
- un module d'obtention configuré pour obtenir, à partir desdites données collectées et d'une métrique climatique prédéterminée, un score représentatif de l'impact climatique de chaque vol de ladite pluralité de vol, ledit impact climatique couvrant à la fois les émissions $CO_2$ dudit vol et les effets non-$CO_2$ associés audit vol ;
- un module de détermination configuré pour déterminer, à partir de l'ensemble des scores de chaque vol de ladite pluralité de vol, l'allocation de carburant d'aviation durable associée à la réduction maximale de l'impact climatique de la totalité des vols de ladite pluralité, ladite allocation allouant à chaque vol une quantité élémentaire de carburant d'aviation durable à utiliser pendant ledit vol.

L'invention apparaîtra plus clairement à la lecture de la description qui va suivre, donnée uniquement à titre d'exemple non limitatif, et faite en référence aux dessins dans lesquels :

Fig. 1] la figure 1 est une représentation schématique d'un dispositif électronique d'allocation de carburant d'aviation durable à une pluralité de vols prévus sur un intervalle de temps prédéterminé, selon la présente invention.
[Fig. 2] la figure 2 est un organigramme des principales étapes d'un procédé d'allocation de carburant d'aviation durable à une pluralité de vols prévus sur un intervalle de temps prédéterminé, selon la présente invention.

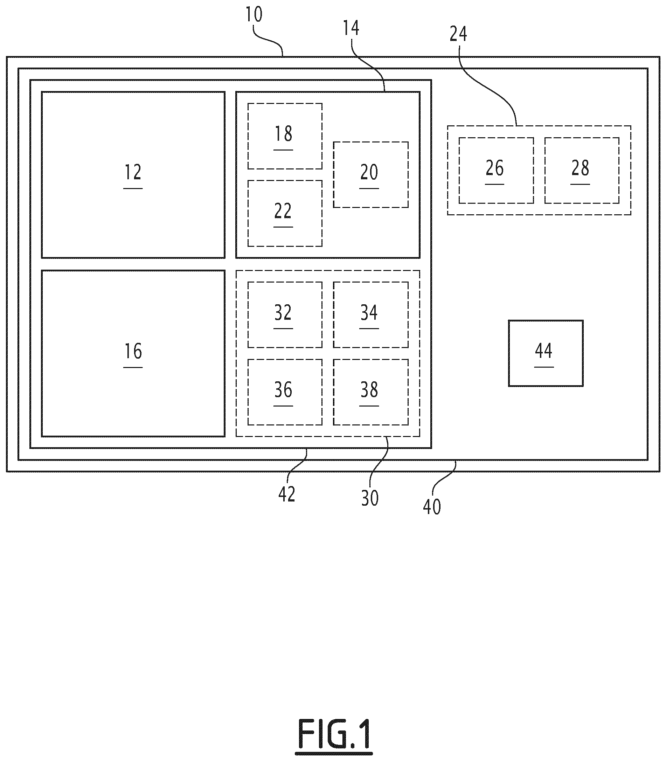

La figure 1 illustre un mode de réalisation d'un dispositif électronique 10 d'allocation de carburant d'aviation durable à une pluralité de vols prévus sur un intervalle de temps prédéterminé, selon la présente invention.

Le dispositif électronique 10 comprend tout d'abord un module 12 de collecte configuré pour collecter des données de vol et acquérir, pour chaque vol, au moins une paire de données formée par une information représentative de l'aéroport de départ et une information représentative de l'aéroport d'arrivée dudit vol.

En complément facultatif, ledit module 12 de collecte est également configuré pour collecter des données complémentaires de ladite paire de données, comprenant au moins un élément appartenant au groupe comprenant au moins :

- le type d'aéronef opérant le vol considéré ;
- la motorisation de l'aéronef opérant le vol considéré ;
- l'heure et le jour de départ prévus dudit vol considéré ;
- la trajectoire et/ou le plan de vol prévu pour ledit vol ;
- au moins une donnée météorologique prévue sur la trajectoire de type appartenant au groupe comprenant au moins :

    + une donnée d'humidité ;
    + une donnée de température ;
    + une donnée de vent.

Le dispositif électronique 10 comprend en outre :

- un module 14 d'obtention configuré pour obtenir, à partir desdites données collectées et d'une métrique climatique prédéterminée, un score représentatif de l'impact climatique de chaque vol de ladite pluralité de vol, ledit impact climatique couvrant à la fois les émissions $CO_2$ dudit vol et les effets non-$CO_2$ associés audit vol, et

- un module 16 de détermination configuré pour déterminer, à partir de l'ensemble des scores de chaque vol de ladite pluralité de vol, l'allocation de carburant d'aviation durable associée à la réduction maximale de l'impact climatique de la totalité des vols de ladite pluralité, ladite allocation allouant à chaque vol une quantité élémentaire de carburant d'aviation durable à utiliser pendant ledit vol.

En complément facultatif (représenté en pointillés), le module d'obtention 14 comprend un premier outil 18 de détermination configuré pour déterminer au moins une valeur appartenant au groupe comprenant au moins :

- la quantité de dioxyde de carbone issue des émissions $CO_2$ dudit vol ;
- la quantité de dioxyde de carbone équivalent associé à au moins une trainée de condensation persistante dudit vol ;
- la distance sur laquelle au moins une trainée de condensation persistante dudit vol est propre à se former ;
- une fonction représentative de l'impact climatique, au fil du temps, le long de la trajectoire dudit vol, d'au moins une trainée de condensation persistante propre à se former au cours dudit vol.

Selon une variante particulière ledit premier outil 18 de détermination utilise au moins un des éléments de détermination appartenant au groupe d'éléments de détermination comprenant :

- un outil de modélisation de la formation et de l'évolution des traînées de condensation et des cirrus tel que CoCip (de l'anglais *Contrail Cirrus Prediction tool*):
- des fonctions prédéterminées algorithmiques de changement climatique telles que les aCCF (de l'anglais *algorithmic Climate Change Function);*
- au moins une moyenne statistique de données historiques préalablement mémorisées.

A noter, qu'en fonction dudit premier outil de détermination 18 selon cette variante particulière, lors de l'étape 52 de collecte il est nécessaire d'obtenir des données météorologiques d'entrée supplémentaires.

Par exemple, si l'outil CoCip précité est utilisé, les données météorologiques d'entrée nécessaires sont listées dans la page 33 du document de Teoh et al. intitulé « *Flight trajectories, aircraft performance end emissions* ».

Des données météorologiques d'entrée différentes de celle requises par l'outil CoCip sont nécessaires pour les fonctions aCCF, dont une liste est notamment indiquée au sein de la sous-partie intitulée « Download Wx data fom ECMWF » du document consultable via l'URL suivante : https://py.contrails.org/integrations/ACCF.html.

Selon ce complément facultatif, le module d'obtention 14 comprend également un deuxième outil 20 de détermination configuré pour déterminer au moins un élément de score estimé appartenant au groupe comprenant :

- le ratio de la quantité de dioxyde de carbone équivalent associé à au moins une trainée de condensation persistante dudit vol sur la quantité de dioxyde de carbone issue des émissions $CO_2$ dudit vol ;
- le ratio de la distance sur laquelle au moins une trainée de condensation persistante dudit vol est propre à se former sur la distance totale propre à être parcourue durant ledit vol ;
- un élément de score estimé obtenu à partir de la fonction représentative de l'impact climatique, au fil du temps, le long de la trajectoire dudit vol, d'au moins une trainée de condensation persistante propre à se former au cours dudit vol en utilisant l'amplitude et les instants de pics d'impacts représentés via ladite fonction.

Selon ce complément facultatif, le module d'obtention 14 comprend également un outil de combinaison 22 configuré pour, en cas de détermination par l'outil 20 d'au moins deux éléments de score estimés, combiner selon une règle prédéterminée lesdits au moins deux éléments de score estimés pour obtenir ledit score estimé.

En complément facultatif, ladite métrique climatique prédéterminée est propre à être sélectionnée au préalable au sein d'une liste comprenant au moins les métriques suivantes :

- GWP20 (avec GWP20 de l'anglais *Global Warning Potential over 20 years*) ;
- GWP50 (avec GWP50 de l'anglais *Global Warning Potential over 50 years*) ;
- GWP100 (avec GWP100 de l'anglais *Global Warning Potential over 100 years*) ;
- ATR20 (avec ATR20 de l'anglais *Average Temperature Response aggregated over 20 years*);
- ATR50 (avec ATR20 de l'anglais *Average Temperature Response aggregated over 50 years*);
- ATR100 (avec ATR100 de l'anglais *Average Temperature Response aggregated over 100 years*) ;
- AGTP20 ou GTP20 (avec AGTP20 de l'anglais *Absolute Global Temperature Change Potential over 20 years* et GTP20 de l'anglais *Global Temperature Change Potential over 20 years);*
- AGTP50 ou GTP50 (avec AGTP50 de l'anglais *Absolute Global Temperature Change Potential over 50 years* et GTP50 de l'anglais *Global Temperature Change Potential over 50 years*) ;

- AGTP100 ou GTP100 (avec AGTP100 de l'anglais *Absolute Global Temperature Change Potential over 100 years* et GTP100 de l'anglais *Global Temperature Change Potential over 100 years*) ;
- EF (de l'anglais Energy Forcing) ou RF (de l'anglais Radiative Forcing),
- ou toute autre métrique climatique connue, telle que notamment citée et expliquée par Borella et al. dans son article intitulé « *The importance of an informed choice of CO2-equivalence metrics for contrail avoidance* ».

En complément facultatif, le module 16 de détermination de l'allocation de carburant d'aviation durable est configuré pour mettre en œuvre une optimisation par programmation linéaire, ladite optimisation par programmation linéaire ayant un objectif de maximisation de la réduction de l'impact climatique de la totalité des vols de ladite pluralité, et de respect d'au moins une contrainte prédéterminée de disponibilité et d'utilisation de carburant d'aviation durable.

Selon ce complément facultatif, ladite au moins une contrainte appartient au groupe comprenant au moins l'une des trois contraintes suivantes :

- la somme des quantités élémentaires de carburant d'aviation durable allouées respectivement à chaque vol de ladite pluralité est inférieure ou égale à la quantité totale de carburant d'aviation durable disponible pour ladite pluralité ;
- pour chaque vol auquel une quantité élémentaire de carburant d'aviation durable est allouée, le pourcentage de ladite quantité élémentaire par rapport à la quantité totale de carburant nécessaire audit vol est inférieur ou égal à une valeur de pourcentage prédéterminée ;
- la somme des quantités élémentaires de carburant d'aviation durable allouées respectivement à chaque vol d'un ensemble de vols de ladite pluralité associé au même aéroport de départ est inférieure ou égale à la quantité totale de carburant d'aviation durable disponible au sein dudit aéroport de départ pour ledit ensemble de vols.

En complément facultatif, tel que représenté en pointillés sur la figure 1, le dispositif électronique 10 d'allocation de carburant d'aviation durable à une pluralité de vols prévus sur un intervalle de temps prédéterminé comprend également un module 24 de restitution de l'allocation de carburant déterminée par le module 16. Un tel module de restitution 24 est configuré pour restituer, à au moins un opérateur de vol ou à au moins un contrôleur de la distribution de carburant au sein d'un aéroport de départ d'au moins un des vols de ladite pluralité, ou encore à un personnel appartenant à une compagnie aérienne ou pétrolière, la quantité élémentaire de carburant d'aviation durable SAF allouée à chaque vol selon ladite allocation. Par exemple, l'intervalle de temps prédéterminé permet de sélectionner tous les vols d'un jour partant entre 8h et 11h du matin, ou encore tous les vols entre 14h et 22h, etc.

Pour ce faire, ledit module 24 comprend optionnellement un outil 26 de transmission configuré pour transmettre, par exemple via une communication radio sans fil, à chaque opérateur de vol, ou à chaque personne chargée de l'avitaillement en carburant d'aviation durable SAF la quantité élémentaire de carburant d'aviation durable SAF allouée à chaque vol selon ladite allocation, et/ou un outil 28 d'affichage ou de restitution sonore configuré pour indiquer à chaque opérateur de vol, ou à chaque personne chargée de l'avitaillement en carburant d'aviation durable SAF, la quantité élémentaire de carburant d'aviation durable SAF allouée à chaque vol selon ladite allocation.

En complément facultatif tel qu'illustré en pointillés sur la figure 1, le dispositif électronique 10 d'allocation de carburant d'aviation durable à une pluralité de vols prévus sur un intervalle de temps prédéterminé comprend également un module 30 de vérification configuré pour vérifier, après mise en œuvre effective de ladite pluralité de vols, l'efficacité de ladite allocation qui a été appliquée lors de ladite mise en œuvre effective de ladite pluralité de vols.

Selon ce complément facultatif, le module 30 de vérification comprend notamment un outil 32 de collecte configuré pour collecter les données effectives de vol en acquérant, pour chaque vol, au moins des données d'au moins un type appartenant au groupe comprenant au moins :

+ des données radar de trajectoire effectuée ;
+des données de vol brutes fournies par un enregistreur à accès rapide ;
+des données météorologiques représentatives des conditions météorologiques rencontrées lors dudit vol.

Selon ce complément facultatif, le module 30 de vérification comprend par exemple en outre un outil 34 d'obtention configuré pour obtenir, à partir desdites données effectives collectées, de ladite allocation et de ladite métrique climatique prédéterminée, un score effectif représentatif de l'impact climatique effectif de chaque vol de ladite pluralité de vol, ledit impact climatique effectif couvrant à la fois les émissions $CO_2$ dudit vol et les effets non-$CO_2$ associés audit vol effectué en utilisant le carburant d'aviation durable alloué selon ladite allocation.

Selon ce complément facultatif, le module 30 de vérification comprend en outre par exemple un outil 36 de détermination configuré pour déterminer, à partir de l'ensemble des scores effectifs de chaque vol de ladite pluralité de vol, la réduction effective d'impact climatique obtenue via ladite allocation.

Selon ce complément facultatif, le module 30 de vérification comprend en outre par exemple un outil 38 de comparaison, configuré pour comparer ladite réduction effective à ladite réduction maximale estimée lors de ladite détermination de l'allocation, et en présence d'un écart, fournir ledit écart, notamment via ledit module optionnel de restitution 24 précédemment décrit.

Dans l'exemple de la figure 1, le dispositif électronique d'allocation de carburant d'aviation durable à une pluralité de vols prévus sur un intervalle de temps prédéterminé comprend une unité 40 de traitement d'informations formée par exemple d'une mémoire 42 et d'un processeur 44 associé à la mémoire 42.

Dans l'exemple de la figure 1, le module de collecte 12, le module d'obtention 14, le module de détermination 16, ainsi qu'en complément facultatif le module de restitution 24 et le module de vérification 30, sont réalisés chacun sous forme d'un logiciel, ou d'une brique logicielle, exécutable par le processeur 44. La mémoire 42 du dispositif électronique d'allocation de carburant d'aviation durable à une pluralité de vols prévus sur un intervalle de temps prédéterminé est alors apte à stocker un logiciel de collecte, un logiciel d'obtention, un logiciel de détermination, ainsi qu'en complément facultatif un logiciel de restitution et un logiciel de vérification. Le processeur 44 est alors apte à exécuter chacun des logiciels parmi le logiciel de collecte, le logiciel d'obtention, le logiciel de détermination, ainsi qu'en complément facultatif le logiciel de restitution et le logiciel de vérification.

En variante, tel qu'illustré sur l'exemple de la figure 1, le module de collecte 12, le module d'obtention 14, le module de détermination 16, ainsi qu'en complément facultatif le module de restitution 24 et le module de vérification 30, sont réalisés chacun sous forme d'un logiciel, et le module de restitution 24 n'est pas réalisé sous forme logicielle mais sous forme d'un module électronique.

En variante non représentée, le module de collecte 12, le module d'obtention 14, le module de détermination 16, ainsi qu'en complément facultatif le module de restitution 24 et le module de vérification 30, sont réalisés chacun sous forme d'un composant logique programmable, tel qu'un FPGA (de l'anglais *Field Programmable Gate Array),* ou encore d'un circuit intégré, tel qu'un ASIC (de l'anglais *Application Specific Integrated Circuit).*

Lorsque le dispositif électronique 10 d'allocation de carburant d'aviation durable à une pluralité de vols prévus sur un intervalle de temps prédéterminé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

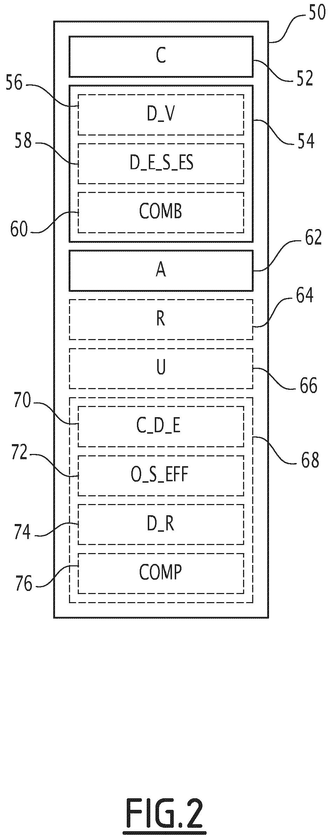

On décrit désormais ci-après en relation avec la figure 2 un exemple de fonctionnement dudit dispositif électronique 10 d'allocation de carburant d'aviation durable à une pluralité de vols prévus sur un intervalle de temps prédéterminé.

Plus précisément, selon le mode de réalisation de la présente invention illustré par la figure 2, le procédé 50 d'allocation de carburant d'aviation durable à une pluralité de vols prévus sur un intervalle de temps prédéterminé comprend une première étape 52 de collecte C de données de vol acquérant, pour chaque vol, au moins une paire de données formée par une information représentative de l'aéroport de départ et une information représentative de l'aéroport d'arrivée dudit vol, une telle information correspond par exemple à une paire couplant deux villes à savoir la ville de départ et la ville d'arrivée (de l'anglais *city pair)* tel que par exemple la paire « PARIS-NYC » pour représenter un vol entre Paris et New-York City.

En complément facultatif, la collecte 52 de données de vol acquiert, pour chaque vol, en complément de ladite paire de données, au moins un élément appartenant au groupe comprenant au moins :

- le type d'aéronef opérant le vol considéré (par exemple un aéronef Airbus A320, un Boeing 737, un Airbus A350, un Embraer 190, etc.) ;
- la motorisation de l'aéronef opérant le vol considéré (par exemple un moteur CFM56-5B4, LEAP-1B28, GEnx-1B70/P2, la base de donnée moteur de l'Organisation de l'Aviation Civile Internationale OACI, consultable via l'URL suivante : https://www.easa.europa.eu/en/domains/environment/icao-aircraft-engine-emissions-databank donnant également une liste des moteurs existants, et dans le cas où l'identification du moteur n'est pas disponible, une motorisation par défaut est propre à être utilisée correspondant par exemple au moteur le plus courant pour le type d'aéronef opérant le vol considéré) ;
- l'heure et le jour de départ prévus dudit vol considéré ;
- la trajectoire et/ou le plan de vol prévu pour ledit vol, par exemple sous la forme d'un ensemble de points définis en quatre dimensions, à savoir trois dimensions spatiales selon les coordonnées (x,y,z) d'un repère prédéterminé et une dimension temporelle en indiquant l'instant t associé audit point de la trajectoire ;
- au moins une donnée météorologique prévue sur la trajectoire (i.e. la trajectoire du city pair) de type appartenant au groupe comprenant au moins :

+ une donnée d'humidité ;
+ une donnée de température ;
+ une donnée de vent.

Puis, le procédé 50 selon la présente invention comprend une étape 54 d'obtention, à partir desdites données collectées et d'une métrique climatique prédéterminée, d'un score estimé représentatif de l'impact climatique estimé de chaque vol de ladite pluralité de vols, ledit impact climatique estimé couvrant à la fois les émissions $CO_2$ dudit vol et les effets non-$CO_2$ associés audit vol.

Autrement dit, ladite étape d'obtention 54 permet d'évaluer, sous forme de score $Bj$, l'impact climatique de chaque vol $j$ de ladite pluralité, notamment sélectionnés via un intervalle de temps prédéterminé, pour identifier ceux comme étant les plus propices à opérer avec un mélange (i.e. un mix) kérosène-SAF au vu de leur bilan $CO_2$ et non-$CO_2$.

En complément facultatif, ladite métrique climatique prédéterminée est propre à être sélectionnée au préalable au sein d'une liste comprenant au moins les métriques suivantes :

- GWP20 (avec GWP20 de l'anglais *Global Warning Potential over 20 years*) ;
- GWP50 (avec GWP50 de l'anglais *Global Warning Potential over 50 years*) ;
- GWP100 (avec GWP100 de l'anglais *Global Warning Potential over 100 years*) ;
- ATR20 (avec ATR20 de l'anglais *Average Temperature Response aggregated over 20 years*);
- ATR50 (avec ATR20 de l'anglais *Average Temperature Response aggregated over 50 years*);
- ATR100 (avec ATR20 de l'anglais *Average Temperature Response aggregated over 100 years*) ;
- AGTP20 ou GTP20 (avec AGTP20 de l'anglais *Absolute Global Temperature Change Potential over 20 years* et GTP20 de l'anglais *Global Temperature Change Potential over 20 years);*
- AGTP50 ou GTP50 (avec AGTP50 de l'anglais *Absolute Global Temperature Change Potential over 50 years* et GTP50 de l'anglais *Global Temperature Change Potential over 50 years) ;*
- AGTP100 ou GTP100 (avec AGTP100 de l'anglais *Absolute Global Temperature Change Potential over 100 years* et GTP100 de l'anglais *Global Temperature Change Potential over 100 years) ;*
- EF (de l'anglais Energy Forcing) ou RF (de l'anglais Radiative Forcing),
- ou toute autre métrique climatique connue, telle que notamment citée et expliquée par Borella et al. dans son article intitulé « *The importance of an informed choice of CO2-equivalence metrics for contrail avoidance ».*

Selon une variante optionnelle représentée en pointillés, ladite l'obtention 54 d'un score estimé représentatif de l'impact climatique de chaque vol de ladite pluralité de vol comprend successivement au moins trois sous-étapes 56, 58 et 60. Autrement dit, selon cette variante optionnelle, pour chaque vol de ladite pluralité, les sous-étapes 56, 58 et 60 sont réalisées en utilisant les données précédemment collectées lors de l'étape 52 (données de vol, données météorologiques, etc.).

La première sous-étape 56 est la détermination D_V d'au moins une valeur appartenant au groupe comprenant au moins :

- la quantité de dioxyde de carbone issue des émissions $CO_2$ dudit vol ;
- la quantité de dioxyde de carbone équivalent associé à au moins une trainée de condensation persistante dudit vol ;
- la distance sur laquelle au moins une trainée de condensation persistante dudit vol est propre à se former ;
- une fonction représentative de l'impact climatique, au fil du temps, le long de la trajectoire dudit vol, d'au moins une trainée de condensation persistante propre à se former au cours dudit vol.

Selon une première variante, le calcul des émissions de $CO_2$ dues au carburant est réalisé en utilisant un coefficient multiplicateur constant tel que : $EICO2 = 3,16\ kg_{CO2}/kg_{fuel}$ fixé par l'Organisation de l'Aviation Civile Internationale (OACI) tel que $CO_2 = 3,16 * Qt_f$) avec $Qt_f$ la quantité de carburant brûlé comme utilisé dans les documents *ICAO Environmental Report 2022* et dans l'*ICAO Carbon Emissions Calculator Methodology.* Autrement dit, le facteur 3,16 est un facteur basé sur l'estimation standard de la conversion du carburant en $CO_2$.

Selon une deuxième variante, dans le cas où la masse de carburant (i.e. fuel, kerosène, carburéacteur, jetfuel, etc.) propre à être consommée lors du vol considéré n'est pas disponible, il est quand même possible d'estimer la quantité de $CO_2$ émise même si la précision risque d'être plus faible, en utilisant des modèles de performances avions (i.e. aéronefs) (OpenAP® (modèle ouvert de performance des avions consultable via l'URL suivante : https://openap.dev/), un Modèle Poll-Schumann PS tel que décrit par Poll et al. dans le document intitulé : « *An estimation method for the fuel burn and other performance characteristics of civil transport aircraft in the cruise. Part 1 fundamental quantities and governing relations for a general atmosphere* », BADA® (de l'anglais *Base of Aircraft data*), etc.) associés à la trajectoire et aux données météorologiques du vol considéré, ou en s'appuyant sur des données historiques tels que des vols passés similaires ou des moyennes de vols similaires (basées sur le même aéroport de départ et d'arrivée et le même type d'aéronef et éventuellement même type moteur).

Pour la détermination de la quantité de dioxyde de carbone équivalent associé à au moins une trainée de condensation persistante dudit vol, un modèle climatique, tel que par exemple l'outil de modélisation de la formation et de l'évolution des traînées de condensation et des cirrus CoCiP (de l'anglais *Contrail Cirrus Prediction tool*) est utilisé pour calculer les impacts des traînées de condensation. Ce modèle prend en compte les données des vols et des conditions météorologiques, on parle alors des « modèles weather-based » opposés aux « modèles location-based » qui ne prennent pas en compte la météo du jour tels que décrits par la suite).

Un tel outil CoCiP est notamment propre à fournir une variable « $CO_{2eq}$ (contrails) » dont la valeur est égale à l'équivalent $CO_2$ des traînées de condensation de chaque vol de la pluralité considéré en fonction de la métrique climatique choisie (par exemple, GWP100 tel qu'indiqué au sein de la liste de métriques climatiques indiquée précédemment), ou encore une variable « Contrail distance » dont la valeur est égale à la distance sur laquelle les traînées se forment pour chaque vol de la pluralité, ou encore une fonction « Contrail impact over time » représentative de l'impact climatique des traînées, au fil du temps, le long de la trajectoire d'au moins une trainée de condensation persistante propre à se former au cours dudit vol..

En particulier, pour la variable « $CO_{2eq}$ (contrails) », l'outil CoCiP fournit une prédiction du forçage énergétique (de l'anglais *energy forcing)* en Joules, causée par les trainées de condensation générées par le vol, et il est aisé de passer d'une valeur en Joule (*Energy Forcing*) aux différentes métriques (GWP100 par exemple) notamment tel que décrit dans le document accessible via le lien ci-après : https://apidocs.contrails.org/ef-interpretation.html.

L'utilisation de modèles climatiques tels que l'outil de modélisation CoCiP précité à titre d'exemple pour calculer l'impact des effets non-$CO_2$ et plus particulièrement des trainées de condensation nécessite beaucoup de données météorologiques et vol. Dans les cas ou certaines de ces données sont manquantes des solutions de contournements sont disponibles pour quand même évaluer l'impact climatique d'un vol, notamment via :

- l'utilisation d'un modèle basé sur la localisation dits « location-based », utilisant notamment des fonctions prédéterminées algorithmiques de changement climatique telles que les aCCF (de l'anglais *algorithmic Climate Change Function*)) qui prend, pour chaque vol de ladite pluralité, en entrée uniquement la trajectoire et le fuel consommé le long de cette trajectoire, ce modèle fournissant des résultats en Kelvin, et utilisant une métrique climatique ATR (ATR20, ATR50 ou encore ATR100 tel que listées précédemment avec ATR de l'anglais *average temperature response*) qui permet de caractériser quelle sera la moyenne des changements de température provoqués par le vol considéré ;
- des données historiques tels que des vols passés similaires ou des moyennes de vols similaires. Dans ce cas, et contrairement à l'utilisation de « modèles weather-based » ou encore « modèles location-based », les vols similaires associés auxdites données historiques sont définis avec un degré de précision prédéterminé. En effet, étant donné l'impact de la météo sur les effets non-$CO_2$ et particulièrement sur les trainées de condensation (de l'anglais *contrails*), on cherchera à prendre des vols qui idéalement sont partis à des horaires similaires (matinée, soir, etc.) ainsi que si c'est possible prendre des vols qui sont partis à des saisons similaires. Le tout sur un ensemble important de vol pour éliminer les aberrations (de l'anglais *outliers*).

La deuxième sous-étape 58 est la détermination D_E_S_ES d'au moins un élément de score estimé appartenant au groupe comprenant :

- le ratio de la quantité de dioxyde de carbone équivalent associé à au moins une trainée de condensation persistante dudit vol sur la quantité totale de dioxyde de carbone issue des émissions $CO_2$ dudit vol, ce ratio, appelé « Ratio contrail/$CO_2$ », reflétant l'importance relative des traînées de condensation par rapport aux émissions directes du vol. Un tel ratio est typiquement le plus utilisé pour estimer l'impact d'un vol en terme d'effet non-$CO_2$, mais peut néanmoins manquer de détail pour de la prise de décision sur des actions de mitigations car il n'y a pas d'information sur la temporalité des traînées de condensation ni leur répartition.
- le ratio de la distance sur laquelle au moins une trainée de condensation persistante dudit vol est propre à se former sur la distance totale propre à être parcourue durant ledit vol, un tel ratio, appelé « Ratio contrail distance », permettant de comparer la distance des traînées de condensation persistante à la distance totale parcourue par le vol considéré, une valeur élevée de ce ratio impliquant que le vol considéré génère des traînées de condensation persistante sur une grande partie de sa trajectoire (notamment sur au moins la moitié), et étant donné que le carburant d'aviation durable SAF est mélangé au carburant classique et potentiellement dans des réservoirs différents, si une optimisation est réalisée avec ce ratio on aura une certaine assurance que le SAF aura bien été utilisé pour réduire les effets non-$CO_2$ ;
- un élément de score estimé obtenu à partir de la fonction représentative de l'impact climatique, au fil du temps, le long de la trajectoire dudit vol, d'au moins une trainée de condensation persistante propre à se former au cours dudit vol en utilisant l'amplitude et les instants de pics d'impacts représentés via ladite fonction, notamment appelée via l'outil Cocip précité « *Contrail Impact over time* », cet élément de score étant calculé à l'aide d'une fonction de notation (de l'anglais *scoring*) temporelle qui tient compte de l'amplitude et du timing des pics d'impact. Cet élément de score permet de prendre en compte les évolutions temporelles des trainées de condensations, notamment pour de la mitigation prévue en avance. Dans le cas d'un vol long-courrier générant en fin de trajectoire des trainées de condensations importantes, l'évolution de la météo vis-à-vis du moment où l'allocation est faite peut conduire à une situation où la situation atmosphérique a changé et aucune trainée n'est générée. Une fonction de notation (*scoring*) mettant donc un score plus important aux trainées se produisant au début du vol et avec la plus forte amplitude est ainsi propre à être envisagée.

Lorsque l'élément de score est un élément de score estimé obtenu à partir de la fonction représentative de l'impact climatique, au fil du temps, le long de la trajectoire dudit vol, d'au moins une trainée de condensation persistante propre à se former au cours dudit vol en utilisant l'amplitude et les instants de pics d'impacts représentés via ladite fonction, propre à être appelé en anglais « Contrail Impact over time score », un tel élément de score est propre à être représenté par l'équation suivante où la valeur dudit élément de score est normalisée pour garder des valeurs cohérentes vis-à-vis des autres éléments de scores précités « Ratio contrail/$CO_2$ » et « Ratio contrail distance » :

$$\text{« Contrail Impact over time score » normalisé} = \frac{\sum_{i=1}^{n} \frac{A_i}{t_i}}{\sum_{i=1}^{n} |A_i|}$$

avec $A_i$ l'amplitude d'un pic $i$ de ladite fonction ; $t_i$ l'instant où le pic $i$ se produit, et $n$ le nombre de pics de ladite fonction.

A titre d'exemple, pour un vol propre à consommer 4,5 tonnes de fuel sur une distance de 1200km, dont on aurait estimé un impact en $CO_{2eq}$ dues aux trainées de condensation persistantes de 3 tonnes avec la métrique GWP100 et qui serait propre à générer des trainées sur 100km, le tout en trois pics à des horizons temporels différents, par exemple à 5% du vol, 30% du vol et 80% du vol et dans des amplitudes différentes 70%, 20%, 10% respectivement, l'élément de score « Ratio contrail/$CO_2$ » aurait une valeur normalisée égale à 0,21, l'élément de score « Ratio contrail distance » aurait une valeur normalisée égale à 0,1 et l'élément de score « Contrail Impact over time score » aurait une valeur égale à 0,44.

La troisième sous-étape 60 est mise en œuvre en cas de détermination d'au moins deux éléments de score estimés, et correspond à (i.e. est) la combinaison selon une règle prédéterminée desdits au moins deux éléments de score estimés pour obtenir ledit score estimé.

A noter que le type de détermination mis en œuvre lors de la sous-étape 56 rend certains éléments de scores non calculables. En effet si l'utilisation du modèle « location-based » permet de calculer les trois types d'éléments de scores « Ratio contrail/$CO_2$ », « Ratio contrail distance » et « Contrail Impact over time score », ce n'est pas possible de le faire en utilisant unique des données historiques de vols passés similaires, si bien que dans le cas où on utiliserait ces dernières alors le seul élément de score calculable correspond au « Ratio contrail/$CO_2$ » (i ;e. le ratio entre $CO_{2eq}$ et le $CO_2$), et serait l'unique élément de score estimé ensuite utilisé pour l'étape suivante 62 comme paramètre Bj du vol j considéré afin de procéder à l'allocation, en tant que telle, comme décrit par la suite.

Selon une autre mise en œuvre non représentée, les étapes 56, 58, 60 sont mises en œuvre en dehors du dispositif électronique d'allocation de carburant d'aviation durable à une pluralité de vols prévus sur un intervalle de temps prédéterminé, selon la présente invention (i.e. par une entité externe audit dispositif), et dans ce cas le dispositif électronique d'allocation de carburant d'aviation durable obtient directement score estimé calculé de manière externe.

Puis, le procédé 50 selon la présente invention comprend une étape 62, mise en œuvre à partir de l'ensemble des scores estimés de chaque vol de ladite pluralité de vols, pour déterminer l'allocation A de carburant d'aviation durable, associée à la réduction maximale de l'impact climatique estimé de la totalité des vols de ladite pluralité, ladite allocation allouant à chaque vol une quantité élémentaire de carburant d'aviation durable à utiliser pendant ledit vol.

En complément facultatif, la détermination de l'allocation de carburant d'aviation durable utilise une optimisation par programmation linéaire ayant un objectif de maximisation de la réduction de l'impact climatique de la totalité des vols de ladite pluralité, et de respect d'au moins une contrainte prédéterminée de disponibilité et d'utilisation de carburant d'aviation durable.

Autrement dit, l'étape 62 vise à proposer une allocation de SAF qui optimise la réduction de l'impact climatique global des vols, en prenant en compte divers critères climatiques et des contraintes logistiques.

Ce problème est modélisé sous la forme d'un problème de programmation linéaire, avec un objectif de maximisation de la réduction de l'impact climatique tout en respectant la ou les contrainte(s) imposée(s), et est propre à être formalisé en maximisant $\Sigma_j B_j * x_j$, avec $x_j$ la quantité de SAF alloué à chaque vol j cette quantité pouvant être nulle (i.e. pour certains vols il n'y a pas de SAF alloué), $B_j$ le score associé à chaque vol à l'issue de la sous-étape 60 représentant le potentiel de réduction de l'impact climatique pour chaque vol $j$ en considérant que plus est $B_j$ est proche de 1, plus ce vol a un potentiel de réduction d'impact climatique lorsqu'on lui alloue du carburant d'aviation durable SAF (à noter même que dans certains cas, ce score peut être supérieur à 1 si les effets dues aux trainées de condensation persistantes sont supérieurs aux émissions de $CO_2$.

Selon ce complément facultatif, ladite au moins une contrainte appartient au groupe comprenant au moins les trois contraintes suivantes :

- la somme des quantités élémentaires de carburant d'aviation durable allouées respectivement à chaque vol de ladite pluralité est inférieure ou égale à la quantité totale de carburant d'aviation durable disponible pour ladite pluralité, tel qu'illustré par l'équation suivante : $\Sigma_i x_i \leq N$, avec N la quantité de SAF totale disponible pour l'allocation ;
- pour chaque vol auquel une quantité élémentaire de carburant d'aviation durable est allouée, le pourcentage de ladite quantité élémentaire par rapport à la quantité totale de carburant nécessaire audit vol est inférieur ou égale à une valeur de pourcentage prédéterminée, tel qu'illustré par l'équation suivante : $\forall i, \frac{x_i}{\bar{x}_i + x_i} \leq M$, avec M le pourcentage de SAF qu'un vol peut avoir au maximum (aujourd'hui cette valeur est de 50%) ;
- la somme des quantités élémentaires de carburant d'aviation durable allouées respectivement à chaque vol d'un ensemble de vols de ladite pluralité associé au même aéroport de départ est inférieure ou égale à la quantité totale de carburant d'aviation durable disponible au sein dudit aéroport de départ pour ledit ensemble de vols, tel qu'illustré par l'équation suivante : $\forall_{k,l}, \delta_{\{y_k = 1\}} = \delta_{\{l = 1\}}$, avec y représentatif de la présence de SAF en (k,l) respectivement représentatif de la paire (vol, aéroport) et $\delta$ le delta de Kronecker..

Pour résoudre un tel problème de programmation linéaire divers solveurs sont propres à être utilisés pour aboutir à une proposition d'allocation, par exemple le solveur PuLP en Python, ou à titre d'alternative CPLEX® (d'IBM ILOG), Gurobi en Python, etc., capables de fournir pour la pluralité de vols considérée, la quantité de carburant d'aviation durable SAF qui doit être allouée pour maximiser la réduction d'impact climatique.

Il est à noter que ce procédé d'allocation (i.e. de mitigation) pourrait être en outre associé à la mitigation par niveau de vol, à savoir par exemple, qu'un aéronef qui aurait très peu de contraintes imposées par le contrôle de la circulation aérienne ATC (de l'anglais *Air Traffic Control*) pourrait être moins prioritaire pour une allocation de SAF, un moyen de mitigation simple et peu onéreux étant alors déjà disponible à savoir le changement de niveau de vol FL (de l'anglais Flight *Level*) dans ce cas.

En résumé, dans ce cas, un type de contraintes supplémentaire serait pris en compte, et un aéronef, pour un vol considéré, profiterait d'une allocation spécifique de SAF si : l'aéroport de départ dispose de SAF dans une quantité mesurable, le city pair (i.e. la paire couplant deux villes à savoir la ville de départ et la ville d'arrivée du vol considéré) et l'aéronef considérés sont source de vol à "big hits" à savoir un vol dont la quantité en terme d'équivalent $CO_2$ : $CO_{2eq}$ (due aux effets non-CO2) est significative par rapport au CO2 (i.e. rapport $CO_{2eq}/CO_2$ au moins égal à un), et si les mitigations simples et moins onéreuses de type "changement de niveau de vol FL" sont considérées inutiles, impossible ou trop incertaines.

Ensuite, optionnellement, tel qu'illustré en pointillés selon l'exemple de réalisation de la figure 2, le procédé 50 selon la présente invention comprend une étape optionnelle 64 de restitution R de l'allocation de carburant déterminée à l'issue de l'étape 62.

Une telle restitution étant, comme indiqué précédemment, effectuée via une transmission (e.g. une communication radio sans fil), et/ou via un affichage ou encore une restitution sonore.

Ensuite, optionnellement, tel qu'illustré en pointillés selon l'exemple de réalisation de la figure 2, le procédé 50 selon la présente invention comprend une étape optionnelle 66 d'utilisation U, en tant que telle, de ladite allocation lors de l'avitaillement en carburant d'aviation durable SAF de chaque aéronef associé à chaque vol de ladite pluralité.

En complément facultatif, le procédé 50 selon la présente invention comprend en outre une étape 68 de vérification, après mise en œuvre effective de ladite pluralité de vols, de l'efficacité de ladite allocation.

Selon une variante particulière de ce complément facultatif, ladite étape de vérification 68 comprend les sous-étapes 70, 72, 74 et 76 mises en œuvre après arrivée de ladite pluralité de vols.

La sous-étape 70 est une étape de collecte C_D_E de données effectives de vol acquérant, pour chaque vol, au moins des données d'au moins un type appartenant au groupe comprenant au moins :

+ des données radar de trajectoire effectuée ;
+des données de vol brutes fournies par un enregistreur à accès rapide ;
+des données météorologiques représentatives des conditions météorologiques rencontrées lors dudit vol.

A noter que les données météorologiques nécessaires à l'étape de vérification 68 sont de types similaires à celles requises lors de l'étape de collecte 52 et sont en outre avantageusement propres à être complétées par des données météorologiques collectées au cours du vol par des capteurs de l'aéronef propres à capter des données de température de vent voire d'humidité notamment pour les aéronefs composant la flotte IAGOS (de l'anglais *In-service Aircraft for a Global Observing System*).

La sous-étape 72 est mise en œuvre en utilisant lesdites données effectives collectées, ladite allocation et ladite métrique climatique prédéterminée, et est une étape d'obtention O_S_EFF d'un score effectif représentatif de l'impact climatique effectif de chaque vol de ladite pluralité de vol, ledit impact climatique effectif couvrant à la fois les émissions $CO_2$ dudit vol et les effets non-$CO_2$ associés audit vol effectué en utilisant le carburant d'aviation durable alloué selon ladite allocation.

La sous-étape 74 est mise en œuvre en utilisant l'ensemble des scores effectifs de chaque vol de ladite pluralité de vol et est une étape de détermination D_R de la réduction effective d'impact climatique obtenue via ladite allocation.

Enfin la sous-étape 76 est une étape de comparaison COMP de ladite réduction effective à ladite réduction maximale estimée lors de ladite détermination 62 de l'allocation, et en présence d'un écart (supérieur à un seuil prédéterminé), comprend également la restitution dudit écart notamment via ledit module optionnel de restitution 24 précédemment décrit.

Autrement dit, selon l'étape 68 de vérification, une fois l'allocation déterminée à l'issue de l'étape 62, et le SAF alloué concrètement aux différents aéronefs, il est possible à postériori de vérifier que la stratégie d'allocation a été bénéfique du point de vue climatique, par exemple en réduisant la quantité de $CO_{2eq}$ émise après l'allocation versus le scénario sans allocation.

Pour cela, on récupère donc selon la sous-étape 70 encore une fois les vols réalisés, cette fois-ci en utilisant les données d'un système de surveillance coopératif pour le contrôle du trafic aérien (e.g. ADS-B de l'anglais *Automatic dependent surveillance-broadcast*) de trajectoire ou éventuellement les données de vol brutes fournies par un enregistreur à accès rapide QAR (de l'anglais *Quick Access Recorder*). La météo au moment du vol effectué est également récupérée et des calculs d'émissions sont réalisés pour déterminer la quantité de dioxyde de carbone équivalent $CO_{2eq}$ émise par chaque vol de la pluralité de vol considérée pour l'allocation.

Pour prendre en compte la quantité de carburant d'aviation durable SAF dans le calcul d'émissions plusieurs méthodes connues sont propres à être utilisées, en utilisant par exemple les données associées aux moteurs, notamment relatives aux particules non volatiles nvPM, à l'index d'émission EI (de l'anglais *emission index*), etc., et des outil de modélisation de la formation et de l'évolution des traînées de condensation et des cirrus tel que CoCip (de l'anglais *Contrail Cirrus Prediction tool*) pour calculer le forçage radiatif RF (de l'anglais *Radiative Forcing),* puis la quantité de dioxyde de carbone équivalent $CO_{2eq}$ associée de ces vols, une approche simplifiée à base de coefficients et d'abaques connus en fonction du mélange (i.e. de la proportion) de SAF dans chaque vol est également propre à être appliquée. Une interpolation pour des valeurs de SAF non existantes dans ces méthodes connues précitées est, le cas échéant, également propre à être mise en œuvre lors de cette étape de vérification 68.

Selon cette étape 68, via la sous-étape 76, il est enfin proposé de comparer l'ensemble des émissions des différents vols et réaliser un delta versus un scénario alternatif crédible, tel que par exemple, le scénario correspondant à celui récemment mis en avant par l'union Européenne avec un nouveau mandat pour que tous les vols européens intègrent une quantité minimum de SAF de quelques pourcents (d'un à deux pourcents).

Une telle comparaison 76 a postériori permet donc de comparer l'allocation proposée selon la présente invention à plusieurs scénarios nominaux et s'assurer d'un impact réduit.

Un telle étape de vérification 68 est en outre propre à être utilisée pour créer des modèles de consommation/utilisation de SAFs en vol dans le cas où un système de gestion de fuel innovant permettrait de réaliser une consommation non-uniforme de SAF durant un vol.

L'homme du métier comprendra que l'invention ne se limite pas aux modes de réalisations décrits, ni aux exemples particuliers de la description, les modes de réalisation et les variantes mentionnées ci-dessus étant propres à être combinés entre eux pour générer de nouveaux modes de réalisation de l'invention.

Autrement dit, l'invention cherche notamment à estimer et détecter les vols susceptibles de générer des trainées de condensation et de proposer une allocation réaliste du carburant d'aviation durable SAF pour ces vols en fonction des multiples contraintes (infrastructures aéroportuaires, contraintes associées aux compagnies aériennes, SAF non disponible, impossibilité d'éviter les zones de génération de trainées de condensation à cause des conditions de trafic ATC, etc.).

L'invention propose donc de réduire l'impact climatique de l'aviation en s'appuyant sur une meilleure allocation du SAF basée sur des calculs et estimations issus de modèles climatiques, météorologiques et aéronefs.

## Revendications

**1.** Procédé (50) d'allocation de carburant d'aviation durable à une pluralité de vols prévus sur un intervalle de temps prédéterminé, le procédé étant mis en œuvre par un dispositif électronique, et comprenant au moins les étapes suivantes mises en œuvre préalablement au départ de ladite pluralité de vol :

- collecte (52) de données de vol acquérant, pour chaque vol, au moins une paire de données formée par une information représentative de l'aéroport de départ et une information représentative de l'aéroport d'arrivée dudit vol ;
- à partir desdites données collectées et d'une métrique climatique prédéterminée, obtention (54) d'un score estimé représentatif de l'impact climatique estimé de chaque vol de ladite pluralité de vols, ledit impact climatique estimé couvrant à la fois les émissions $CO_2$ dudit vol et les effets non-$CO_2$ associés audit vol ;
- à partir de l'ensemble des scores estimés de chaque vol de ladite pluralité de vols, détermination (62) de l'allocation de carburant d'aviation durable, associée à la réduction maximale de l'impact climatique estimé de la totalité des vols de ladite pluralité, ladite allocation allouant à chaque vol une quantité élémentaire de carburant d'aviation durable à utiliser pendant ledit vol ;

ladite métrique climatique prédéterminée étant propre à être sélectionnée au préalable au sein d'une liste comprenant au moins les métriques suivantes :

- GWP20 ;
- GWP50 ;
- GWP100 ;
- ATR20 ;
- ATR50 ;
- ATR100 ;
- GTP20 ou AGTP20 ;
- GTP50 ou AGTP50 ;
- GTP100 ou AGTP100 ;
- EF ou RF.

2. Procédé (50) selon la revendication 1, dans lequel la collecte (52) de données de vol acquiert, pour chaque vol, en complément de ladite paire de données, au moins un élément appartenant au groupe comprenant au moins :

- le type d'aéronef opérant le vol considéré ;
- la motorisation de l'aéronef opérant le vol considéré ;
- l'heure et le jour de départ prévus dudit vol considéré ;
- la trajectoire et/ou le plan de vol prévu pour ledit vol ;
- au moins une donnée météo prévue sur la trajectoire de type appartenant au groupe comprenant au moins :

+ une donnée d'humidité ;
+ une donnée de température ;
+ une donnée de vent.

3. Procédé selon la revendication 1 ou 2, dans lequel l'obtention (54) d'un score estimé représentatif de l'impact climatique de chaque vol de ladite pluralité de vol comprend successivement au moins :

- la détermination (56) d'au moins une valeur appartenant au groupe comprenant au moins :

- la quantité de dioxyde de carbone issue des émissions $CO_2$ dudit vol ;
- la quantité de dioxyde de carbone équivalent associé à au moins une trainée de condensation persistante dudit vol ;
- la distance sur laquelle au moins une trainée de condensation persistante dudit vol est propre à se former ;
- une fonction représentative de l'impact climatique au fil du temps le long de la trajectoire dudit vol d'au moins une trainée de condensation persistante propre à se former au cours dudit vol ;

- la détermination (58) d'au moins un élément de score estimé appartenant au groupe comprenant :

- le ratio de la quantité de dioxyde de carbone équivalent associé à au moins une trainée de condensation persistante dudit vol sur la quantité de dioxyde de carbone issue des émissions $CO_2$ dudit vol ;
- le ratio de la distance sur laquelle au moins une trainée de condensation persistante dudit vol est propre à se former sur la distance totale propre à être parcourue durant ledit vol ;

- un élément de score estimé obtenu à partir de la fonction représentative de l'impact climatique au fil du temps le long de la trajectoire dudit vol d'au moins une trainée de condensation persistante propre à se former au cours dudit vol en utilisant l'amplitude et les instants de pics d'impacts représentés via ladite fonction ;

- en cas de détermination d'au moins deux éléments de score estimés, la combinaison (60) selon une règle prédéterminée desdits au moins deux éléments de score estimés pour obtenir ledit score estimé.

4. Procédé (50) selon l'une quelconque des revendications précédentes, dans lequel la détermination (62) de l'allocation de carburant d'aviation durable utilise une optimisation par programmation linéaire ayant un objectif de maximisation de la réduction de l'impact climatique de la totalité des vols de ladite pluralité, et de respect d'au moins une contrainte prédéterminée de disponibilité et d'utilisation de carburant d'aviation durable.

5. Procédé (50) selon la revendication 4, dans lequel ladite au moins une contrainte appartient au groupe comprenant au moins l'une des trois contraintes suivantes :

- la somme des quantités élémentaires de carburant d'aviation durable allouées respectivement à chaque vol de ladite pluralité est inférieure ou égale à la quantité totale de carburant d'aviation durable disponible pour ladite pluralité ;
- pour chaque vol auquel une quantité élémentaire de carburant d'aviation durable est allouée, le pourcentage de ladite quantité élémentaire par rapport à la quantité totale de carburant nécessaire audit vol est inférieur ou égale à une valeur de pourcentage prédéterminée ;
- la somme des quantités élémentaires de carburant d'aviation durable allouées respectivement à chaque vol d'un ensemble de vols de ladite pluralité associé au même aéroport de départ est inférieure ou égale à la quantité totale de carburant d'aviation durable disponible au sein dudit aéroport de départ pour ledit ensemble de vols.

6. Procédé (50) selon l'une quelconque des revendications précédentes comprenant en outre une étape de vérification (68), après mise en œuvre effective de ladite pluralité de vols, de l'efficacité de ladite allocation, ladite étape de vérification (68) comprenant les sous-étapes suivantes mises en œuvre après arrivée de ladite pluralité de vols :

- collecte de données effectives de vol acquérant, pour chaque vol, au moins des données d'au moins un type appartenant au groupe comprenant au moins :

+ des données radar de trajectoire effectuée ;
+ des données de vol brutes fournies par un enregistreur à accès rapide ;
+ des données météorologiques représentatives des conditions météorologiques rencontrées lors dudit vol ;

- à partir desdites données effectives collectées, de ladite allocation et de ladite métrique climatique prédéterminée, obtention d'un score effectif représentatif de l'impact climatique effectif de chaque vol de ladite pluralité de vol, ledit impact climatique effectif couvrant à la fois les émissions $CO_2$ dudit vol et les effets non-$CO_2$ associés audit vol effectué en utilisant le carburant d'aviation durable alloué selon ladite allocation ;
- à partir de l'ensemble des scores effectifs de chaque vol de ladite pluralité de vol, détermination de la réduction effective d'impact climatique obtenue via ladite allocation ;
- comparaison de ladite réduction effective à ladite réduction maximale estimée lors de ladite détermination de l'allocation, et en présence d'un écart, restitution dudit écart.

7. Programme d'ordinateur comportant des instructions logicielles qui, lorsqu'elles sont exécutées par un ordinateur, mettent en œuvre un procédé d'allocation de carburant d'aviation durable à une pluralité de vols prévus sur un intervalle de temps prédéterminé selon l'une quelconque des revendications précédentes.

8. Dispositif (10) électronique d'allocation de carburant d'aviation durable à une pluralité de vols prévus sur un intervalle de temps prédéterminé, le dispositif électronique étant **caractérisé en ce qu'**il comprend au moins :

- un module (12) de collecte configuré pour collecter des données de vol et acquérir, pour chaque vol, au moins une paire de données formée par une information représentative de l'aéroport de départ et une information représentative de l'aéroport d'arrivée dudit vol ;
- un module (14) d'obtention configuré pour obtenir, à partir desdites données collectées et d'une métrique climatique prédéterminée, un score représentatif de l'impact climatique de chaque vol de ladite pluralité de vol, ledit impact climatique couvrant à la fois les émissions $CO_2$ dudit vol et les effets non-$CO_2$ associés audit vol ;

- un module (16) de détermination configuré pour déterminer, à partir de l'ensemble des scores de chaque vol de ladite pluralité de vol, l'allocation de carburant d'aviation durable associée à la réduction maximale de l'impact climatique de la totalité des vols de ladite pluralité, ladite allocation allouant à chaque vol une quantité élémentaire de carburant d'aviation durable à utiliser pendant ledit vol ;

ladite métrique climatique prédéterminée étant propre à être sélectionnée au préalable au sein d'une liste comprenant au moins les métriques suivantes :

- GWP20 ;
- GWP50 ;
- GWP100 ;
- ATR20 ;
- ATR50 ;
- ATR100 ;
- GTP20 ou AGTP20 ;
- GTP50 ou AGTP50 ;
- GTP100 ou AGTP100 ;
- EF ou RF.

## FIG.1

FIG.2

Europäisches
Patentamt

European
Patent Office

Office européen
des brevets

## RAPPORT DE RECHERCHE EUROPEENNE

Numéro de la demande

EP 25 20 3128

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/134151 A1 (SWANN PETER [GB]) 14 mai 2015 (2015-05-14) * alinéas [0025], [0053] - [0087], [0103] - [0106] * ----- | 1-8 | INV. G08G5/00 G06Q10/06 G06Q50/06 G08G5/22 |
| A | EP 2 685 280 B1 (ROLLS ROYCE PLC [GB]) 10 juillet 2019 (2019-07-10) * alinéas [0014] - [0016] * ----- | 1-8 | G08G5/32 G08G5/56 G08G5/76 |
| A | US 9 146 566 B2 (ROLLS ROYCE PLC [GB]) 29 septembre 2015 (2015-09-29) * colonne 7, ligne 20 - colonne 8, ligne 49 * ----- | 1-8 | |
| A | US 11 815 031 B2 (ROLLS ROYCE PLC [GB]) 14 novembre 2023 (2023-11-14) * colonne 17, lignes 33-62 * * colonne 34, lignes 25-64 * ----- | 1-8 | |

### DOMAINES TECHNIQUES RECHERCHES (IPC)

G08G
G06Q

Le présent rapport a été établi pour toutes les revendications

| Lieu de la recherche | Date d'achèvement de la recherche | Examinateur |
|---|---|---|
| La Haye | 22 janvier 2026 | Gagin, Thibaut |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 20 3128

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-01-2026

| Document brevet cité au rapport de recherche | Date de publication | Membre(s) de la famille de brevet(s) | | Date de publication |
|---|---|---|---|---|
| US 2015134151 A1 | 14-05-2015 | EP | 2873836 A1 | 20-05-2015 |
| | | US | 2015134151 A1 | 14-05-2015 |
| EP 2685280 B1 | 10-07-2019 | EP | 2685280 A2 | 15-01-2014 |
| | | US | 2013343958 A1 | 26-12-2013 |
| US 9146566 B2 | 29-09-2015 | EP | 2677138 A2 | 25-12-2013 |
| | | EP | 3875740 A1 | 08-09-2021 |
| | | US | 2013340324 A1 | 26-12-2013 |
| US 11815031 B2 | 14-11-2023 | AU | 2022283777 A1 | 06-07-2023 |
| | | CN | 116291901 A | 23-06-2023 |
| | | EP | 4202197 A1 | 28-06-2023 |
| | | GB | 2616824 A | 27-09-2023 |
| | | US | 2023193835 A1 | 22-06-2023 |
| | | US | 2023296060 A1 | 21-09-2023 |
| | | US | 2024077036 A1 | 07-03-2024 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LEE et al.** *The contribution of global aviation to anthropogenic climate forcing for 2000 to 2018*